(19) Europäisches Patentamt
European Patent Office
Office européen des brevets

(11) **EP 2 019 202 A1**

(12) **EUROPÄISCHE PATENTANMELDUNG**
veröffentlicht nach Art. 153 Abs. 4 EPÜ

(43) Veröffentlichungstag:
**28.01.2009 Patentblatt 2009/05**

(51) Int Cl.:
***F03B 13/00*** *(2006.01)*

(21) Anmeldenummer: 06790222.1

(22) Anmeldetag: **10.07.2006**

(86) Internationale Anmeldenummer:
**PCT/UZ2006/000001**

(87) Internationale Veröffentlichungsnummer:
**WO 2007/131246 (15.11.2007 Gazette 2007/46)**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK RS**

(30) Priorität: **10.05.2006 UZ 0600157**

(71) Anmelder: **Treshalov, German Vladislavovich Tashkent 100098 (UZ)**

(72) Erfinder: **Treshalov, German Vladislavovich Tashkent 100098 (UZ)**

(74) Vertreter: **Jeck, Anton**
**Jeck Fleck Herrmann**
**Patentanwälte**
**Postfach 14 69**
**71657 Vaihingen/Enz (DE)**

(54) **VERFAHREN ZUR GEWINNUNG VON ENERGIE AUS DER STRÖMUNG EINES FLIESSENDEN MEDIUMS**

(57) Die Erfindung betrifft ein Verfahren zur Gewinnung von Energie aus einem freiströmenden, horizontalen Strom eines Fließmediums und ein Berechnungsverfahren für energieerzeugende Maschinen, die nach dem erstgenannten Prinzip arbeiten. Das unterscheidende Merkmal des beschriebenen Verfahrens besteht in der Verwendung einer Rückkopplung zwischen der Energie des einströmenden Stroms und der Energie des herausströmenden Stroms eines Fließmediums. Die Rückkopplung wird durch besonders entwickelte Hydraulikmaschinen gewährleistet. Eine schematische Zeichnung einer derartigen Maschine dient zur Erläuterung dieses Verfahrens.

Fig. 1

**Beschreibung**

Die Erfindung bezieht sich auf ein Verfahren zur Energieentnahme aus einem Strömungsmedium.

Das Verfahren kann zur Energieumsetzung und -nutzung bei einem fließenden Medium eingesetzt werden, vorzugsweise bei verschiedenen Wasserbecken, Flüssen, Kanälen, Meeresströmungen, Kläranlagen usw. Dies bedeutet, überall, wo die Strömung von einem fließenden Medium vorliegt, wie Wasser, Schlamm, Pulpe, Suspension, Rohabwasser, chemische Flüssigkeiten usw.

Die bekannten Verfahren zur Energieentnahme (Gewinnung) aus der fließenden Strömung setzen entweder einen Wehrbau oder nur die Gewinnung von kinetischer Energie voraus. Im ersten Fall werden die Wehranlagen gebaut, um einen Flüssigkeitsstau zu erzeugen. Dabei entsteht die Lageenergie infolge der Differenz zwischen dem oberen und dem unteren Niveau der Flüssigkeit (Wehroberwasserkote und die Kote der unteren Haltung). Im zweiten Fall wird die Bewegungsenergie aus der Strömung mittels der wehrlosen Wasserkraftwerke gewonnen.

Jedes dieser Verfahren weist seine Mängel auf. Im ersten Fall müssen Dämme gebaut werden. Das verteuert wesentlich den spezifischen Selbstkostenpreis der gewonnenen Energie und fügt einen riesigen Schaden der Umwelt zu. Beim zweiten Verfahren wird nicht die ganze vorhandene Energie aus der fließenden Strömung entnommen. Das bedingt die Vergrößerung der Anzahl von Energieanlagen, um eine bestimmte Leistung erreichen zu können. Dies führt letztendlich ebenfalls zur Erhöhung der Selbstkosten der gewonnenen Energie.

Die am nächsten liegende technische Lösung ist in dem Patent der RF 2061897 beschrieben. Dieses Verfahren verwendet die Lageenergie der Flüssigkeitsströmung. Diese Energie wird unter Einsatz von einer speziellen technischen Lösung in kinetische Energie der Bewegung von einem Strömungsmedium umgesetzt. Diese Energie wird späterhin durch eine Turbine in Form von Nutzenergie abgegeben. Jedoch wird in diesem Verfahren die Rückkopplung zwischen der Ein- und Austrittsströmung des fließenden Mediums nicht gebraucht.

Es ist Aufgabe der Erfindung, ein Verfahren zur Energieentnahme aus einem Strömungsmedium zu schaffen, das sowohl die Bewegungsenergie der Strömung als auch die Lageenergie der Oberschichten des Strömungsmediums in Bezug auf seine Unterschichten zu gewinnen.

Die gestellte Aufgabe wird durch die Merkmale des Anspruchs 1 gelöst.

Dies wird durch eine speziell dafür entwickelte Maschine erreicht. Diese Maschinen ermöglichen es, die positive Rückkopplung zwischen der Eingangsströmung und der Ausgangsströmungen in der Maschine zu realisieren.

Das neue Verfahren zur Energieentnahme aus dem Strömungsmedium begründet theoretisch die Möglichkeit der Herstellung von solchen Maschinen und repräsentiert das Verfahren zur mathematischen Berechnung ihrer Energiekennwerte. Die Neuheit der Methode besteht darin, dass im Unterschied zu ähnlichen Anlagen das Verfahren auch die Möglichkeit bietet, die Lageenergie der Strömung zu benutzen, um die erforderliche Leistung zu bekommen. Die ähnlichen bekannten Anlagen (wehrlose Wasserkraftwerke) benutzen dagegen nur die kinetische Energie des beweglichen drucklosen Strömungsmediums. Bei den Wehrbauwasserkraftwerken wird die Lageenergie der Differenz zwischen den Energieträgerniveaus (Wasserständen) anhand eines Wehrbaus erzeugt, welcher das Flussbett absperrt. Im Vergleich dazu entsteht die Niveaudifferenz des Energieträgers (also des Strömungsmediums) infolge der positiven Rückverbindung zwischen der Energie des Ein- und des Austrittsströmungsmediums. Das erbringt die Leistungszunahme von über 60 %, was durch die genauen mathematischen Berechnungen nachgewiesen ist.

Die Errichtung der Einrichtung muss nicht unbedingt auf dem Grundbett des Strömungsmediums errichtet werden. Die Einrichtung kann in der Strömung auch im halb eingetieften Schwimmzustand untergebracht werden. Dabei wird die effektive Tiefe der Einströmung als Differenz zwischen dem Niveau des Einströmungsmediums und der unteren Kante der Einrichtung festgelegt werden. Die Tiefe der Ausströmung wird als Differenz zwischen dem Niveau des Ausströmungsmediums und der unteren Kante der Einrichtung festgelegt werden.

Die Erfindung wird anhand der Zeichnungen näher erläutert. Es zeigen:

Fig. 1    schematisch die Beschreibung des Verfahrens mit der Funktion,

Fig. 2    eine Kennlinie des Zusammenhangs zwischen der Ausgangsleistung der Anlage und der Haltungsdifferenz (Differenz zwischen den Spie- gelniveaus) der Ein- und Ausströmungsmedien der Anlage für ver- schiedene Geschwindigkeiten der Eingangsströmung,

Fig. 3    eine dreidimensionale Kennlinie des Zusammenhanges zwischen der Ausgangsleistung der Anlage und der Haltungsdifferenz (Differenz zwischen den Spiegelniveaus) der Ein- und der Ausströmungsmedien und der Einströmungsgeschwindigkeit und

Fig. 4    eine dreidimensionale Kennlinie des Zusammenhanges zwischen der Ausgangsleistung der Anlage und der Haltungsdifferenz (Differenz zwischen den Spiegelniveaus) der Ein- und der Ausströmungsmedien und der Einströmungsgeschwindigkeit für verschiedene effektive Tie- fen des Einströmungsmediums.

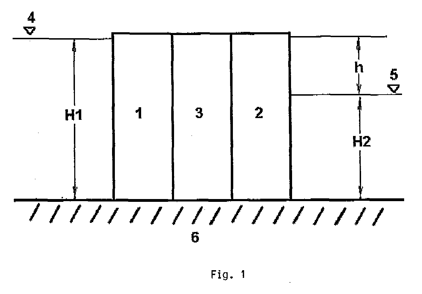

Um das neue Verfahren zu beschreiben, wird die in Fig. 1 schematisch dargestellte Anlage benutzt. Die Konstruktionseinzelheiten dieser Anlage werden nicht offenbart und können getrennt als Einrichtung zur Energieentnahme aus dem Strömungsmedium patentiert werden. Das Funktionsprinzip der Anlage, welche dieses Verfahren zur Energieentnahme aus dem drucklosen horizontalen Strömungsmedium einsetzt, besteht in der Entnahme der kinetischen Energie und der potentiellen Energie. Die kinetische Energie wird der Strömung mit einer Geschwindigkeit V1 und Tiefe H1 bei der Bewegung eines Strömungsmediums und die Lageenergie wird den Oberschichten des Strömungsmediums in Bezug auf die unteren Schichten entnommen. Während des Betriebs der Anlage wird das Strömungsmedium, welches in die Anlage eintritt, beschleunigt. Das verursacht die Absenkung des Strömungsmediums am Auslauf, wie Fig. 1 zeigt. Dadurch entsteht die Niveaudifferenz der Ein- und Ausströmungen (Anstau) h und die Lageenergie der oberen Schichten des Strömungsmediums wird freigesetzt. Diese Energie wird teilweise für die zusätzliche Beschleunigung des ausfließenden Strömungsmediums verbraucht und teilweise wird sie als Nutzenergie abgegeben. Die genaue mathematische Berechnung weist darauf hin, dass es einen stabilen Betriebszustand der Anlage gibt, bei welchem eine stabile Differenz zwischen den Spiegeln der Ein- und Ausströmungen des Strömungsmediums (Anstau) und die stabile Geschwindigkeit des aus der Anlage herausfließenden Strömungsmediums erzeugt wird. Dabei überschreitet die durch die Anlage abgegebene Nutzenergie die kinetische Energie der Einströmung um mehr als 60 % (je nach der Anfangsgeschwindigkeit V1 der Strömung und der Strömungstiefe H1). Das niedrige Niveau des Strömungsmediums am Austritt aus der Anlage wird dank dem in der Hydraulik bekannten so genannten "Ejektionseffekt" aufrechterhalten. Dadurch entsteht auf einem gewissen Abstand vom Ausgangselement der Anlage der so genannte "Sprung". Der Sprung stellt die Differenz zwischen den Strömungsniveaus am Austritt aus der Anlage und dem Niveau des umliegenden Strömungsmediums sicher.

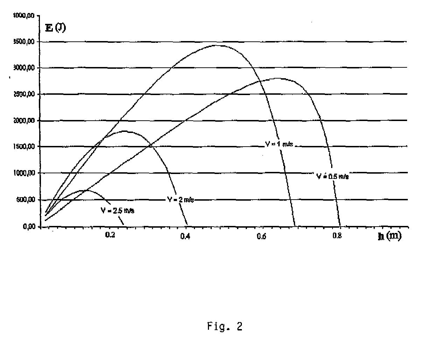

Aus den Diagrammen (Fig. 2, 3 und 4) ist es ersichtlich, dass die Energie-Strömungsniveau-Kurve (Abhängigkeit der Energie von der Differenz zwischen der Ein- und Ausströmung des Strömungsmediums) beim beliebigen Betriebszustand der Anlage ein Maximum aufweist, welches der stabilen Betriebsart der Anlage mit maximaler Ausgangsleistung entspricht. Bei einem beliebigen Punkt der Kurve (Fig. 2) mit positivem Energieausgleich (aufsteigender Ast in der Kurve in Fig. 2) wird die Anlage sich beschleunigen, bis der stabile Betriebszustand erreicht wird.

Im Berechnungsbeispiel wird als Strömungsmedium Wasser mit einer Dichte von 1000 kg/m$^3$ angenommen.

Berechnung der Anlageleistung:

Messeinheiten der physikalischen Größen:

| Größe | Einheit | Lateinische Bezeichnung |
|---|---|---|
| Länge | Meter | m |
| Zeit | Sekunde | s |
| Geschwindigkeit | Metersekunde | m / s |
| Beschleunigung | Metersekunde pro Sekunde | m / s$^2$ |
| Masse | Kilogramm | kg |
| Dichte | Kilogramm pro Kubikmeter | kg / m$^3$ |
| Wasserverbrauch | Kubikmeter pro Sekunde | m$^3$ / s |
| Leistung | Watt | W |
| Energie | Joule | J |

g         Fallbeschleunigung, 9,8 M/c$^2$;
p         Strömungsmediumdichte (kg/m$^3$) ;
L         laufende Länge der Anlage quer über die Strömung (effektive Strömungsbreite) (m);
H1       effektive tiefe der Eingangsströmung (m);
H2       Tiefe der Ausgangsströmung (m);
V1       Geschwindigkeit der Eingangsströmung (m/s);
h         Niveaugefälle zwischen den Ein- und Ausströmungen des Strömungsmediums (m);
V2       Geschwindigkeit der Ausgangsströmung (m/s);
K1       Bewegungsenergie der Eingangsströmung (J);
K2       Bewegungsenergie der Ausgangsströmung (J);
P1       Lageenergie des Energiegefälles zwischen der Ein- und Aus- strömung (J);

| E1 | Gesamtenergie der Eingangsströmung (J); |
|---|---|
| E | Nutzenergie der Strömung (J); |
| S = L * H1 | effektive Fläche der Eingangsströmung ($m^2$); |
| Q = S * V1 | Verbrauch des Strömungsmediums, welches über die Anlage fließt ($m^3$/s); |
| M = p * Q | Masse des Strömungsmediums, welches über die Anlage innerhalb von einer bestimmten Zeit fließt (kg); |
| K1 = M * (V1$^2$) /2 | Bewegungsenergie der Eingangsströmung (J); |
| P1 = g * M * h | Lageenergie der Niveaudifferenz zwischen der Ein- und Aus- strömung (J); |
| V2 = Q / (L * H2) | Geschwindigkeit der Ausgangsströmung (m/s); |
| K2 = M * (V2$^2$) / 2 | Bewegungsenergie der Ausgangsströmung (J); |
| E = K1 + P1 - K2 | Nutzenergie (J); |

oder in allgemeiner Form:

$$E = M * (g * h + (V1^2 * (1 - (H1 / (H1 - h))^2) / 2)$$

oder:

$$E = M* (g * H1 * (1 - V1 / V2) + (V1^2 - V2^2) / 2)$$

Da der Verbrauch des Strömungsmediums, welches in die Anlage eintritt, dem Strömungsmediumsverbrauch am Auslauf aus der Anlage gleich ist und da die Geschwindigkeit der Auslaufströmung höher als die der Einlaufströmung ist, wird die Fläche der Auslaufströmung geringer als die der Einlaufströmung, wird die Fläche geringer als die der Einlaufströmung sein. Folglich wird die Tiefe der Auslaufströmung H2 gegenüber der der Eingangsströmung H1 um die Größe h geringer sein.

Es muss die Abhängigkeit zwischen der Funktion E und Argument h ermittelt werden, indem verschiedene Werte des Energiegefälles h im Bereich von H2 bis 0 eingesetzt werden. Dadurch wird die Kennlinie für diese Abhängigkeit für verschiedene Geschwindigkeiten V1 des Einströmungsmediums (Fig. 2) gezeichnet.

Die E-Funktion gemäß Argument h weist ein Maximum auf, welches der durch die Anlage abgegebenen Maximumleistung entspricht.

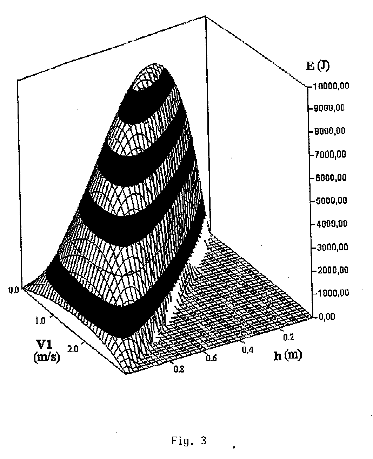

Es muss das dreidimensionale Diagramm für Abhängigkeit der Funktion E von zwei Argumenten h und V1 gezeichnet werden. Diese Funktion weist das exakt ausgeprägte Maximum auf, welches dem optimalen Verhältnis zwischen der Geschwindigkeit des Einströmungsmediums und seiner effektiven Tiefe entspricht (Fig. 3).

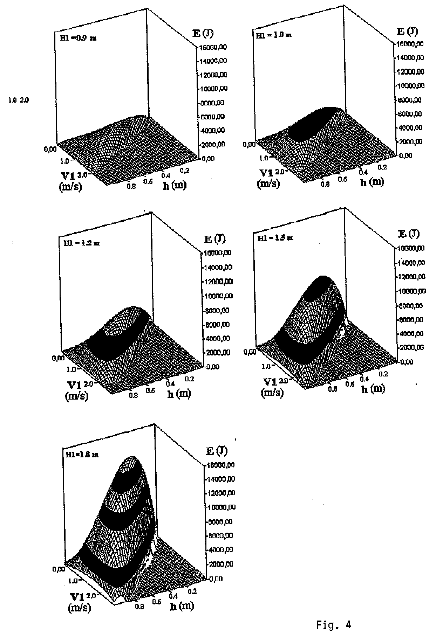

In Fig. 4 ist die Änderung der Ausgangsleistung der Anlage bei verschiedenen effektiven Tiefen der Eintrittsströmung abgebildet.

In Fig. 1 sind folgende Bezugszeichen mit den folgenden Komponenten dargestellt:

1 - Arbeitskomponente(n) des Einströmungsmediums;
2 - Arbeitskomponente(n) des Ausströmungsmediums;
3 - Arbeitskomponente(n), die die positive Rückkopplung zwischen dem Ein- und Ausströmungsmedien sicherstellen ;
4 - Spiegelhöhenlage des Einströmungsmediums;
5 - Spiegelhöhenlage des Ausströmungsmediums;
6 - Grundbett des Strömungsmediums;
H1 - effektive Tiefe des Einströmungsmediums;
H2 - Tiefe des Ausströmungsmediums;
h - Niveaugefälle zwischen dem Ein- und Ausströmungsmedium.

**Patentansprüche**

1. Verfahren zur Energieentnahme aus dem Strömungsmedium,
**dadurch gekennzeichnet,**

**dass** zur Energieentnahme die positive Rückkopplung zwischen der Energie der Ein- und Ausströmungsmedien und das Verfahren zur Berechnung (Auslegung) der Einrichtungen eingesetzt werden, welche dieses Funktionsprinzip benutzen.

Fig. 1

Fig. 2

Fig. 3

Fig. 4

## INTERNATIONAL SEARCH REPORT

| International application No. |
| --- |
| PCT/UZ 2006/000001 |

| A. | CLASSIFICATION OF SUBJECT MATTER | *F03B 13/00 (2006.01)* |
| --- | --- | --- |

According to International Patent Classification (IPC) or to both national classification and IPC

| B. | FIELDS SEARCHED |
| --- | --- |

Minimum documentation searched (classification system followed by classification symbols)

F03B 13/00, F03B 13/10

Documentation searched other than minimum documentation to the extent that such documents are included in the fields searched

Electronic data base consulted during the international search (name of data base and, where practicable, search terms used)

PAJ, Esp@cenet, PCT Online, RUPAT

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | SU 18328 A (VASILEVSKII YU.A. et al.) 30.9.1930 | 1 |
| X | SU 1815406 A1 (LYALKOV N.D.) 15.05.1993 | 1 |
| X | GB 2033974 A (FRANCISCO JOSE GUTIERREZ ATENCIO) 29.05.1980 | 1 |
| X | FR 2350476 A1 (CHAPPELL WALTER LEE ET WATTS JOHN DAWSON) 02.12.1977 | 1 |

☐ Further documents are listed in the continuation of Box C.     ☐ See patent family annex.

| | | |
| --- | --- | --- |
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | |
| "O" | document referring to an oral disclosure, use, exhibition or other means | "Y" document of particular relevance; the claimed invention cannot be considered to involve an inventive step when the document is combined with one or more other such documents, such combination being obvious to a person skilled in the art |
| "P" | document published prior to the international filing date but later than the priority date claimed | "&" document member of the same patent family |

| Date of the actual completion of the international search | Date of mailing of the international search report |
| --- | --- |
| 01 November 2006 (01.11.2006) | 16 November 2006 (16.11.2006) |

| Name and mailing address of the ISA/ | Authorized officer |
| --- | --- |
| | |
| Facsimile No. | Telephone No. |